# FASCICULE DE BREVET EUROPEEN

(11) **EP 2 615 214 B1**
(45) Date de publication et mention de la délivrance du brevet: **08.07.2015**
(21) Numéro de dépôt: 12197935.5
(22) Date de dépôt: 19.12.2012
(51) Int. Cl.: E03B 3/03, E04D 13/08, B65D 88/00

(54) **Dispositif de collecte d'eau pluviale**
Vorrichtung zum Sammeln von Regenwasser
Device for collecting rainwater

(30) Priorité: 21.12.2011 FR 1162152
(43) Date de publication de la demande: 17.07.2013
(73) Titulaire: Paille, Jean-Paul, 71260 Clesse (FR)
(72) Inventeur: Paille, Jean-Paul, 71260 Clesse (FR)
(74) Mandataire: Poncet, Jean-François

(56) Documents cités:
- DE-U1- 29 512 218
- GB-A- 2 243 398
- US-A1- 2010 037 962

## Description

La présente invention concerne un dispositif de collecte d'eau pluviale de type boîte à eau. Les boîtes à eau sont couramment utilisées pour la récupération des eaux pluviales tombant sur un toit d'habitation et servent généralement à recueillir par une face d'ouverture principale les flux d'eau issus de plusieurs gouttières ou canalisations afin de les évacuer dans une seule et même conduite. Un dispositif de collecte d'eau pluviale est décrit dans DE 29512218U, étant en forme de conteneur pliable.

De façon connue, une boîte à eau comprend généralement un conteneur creux ouvert selon une face d'ouverture principale et délimitant une cavité entre une paroi de fond et une paroi périphérique latérale, la paroi de fond étant munie d'un orifice d'évacuation.

Les boîtes à eau sont généralement fabriquées en tôles minces pliées puis assemblées par soudure. La fabrication de ces boîtes à eau nécessite donc des outils spécifiques de pliage et de soudure pour des opérations de pliage et de soudure qui sont relativement longues et coûteuses en main d'oeuvre qualifiée.

Lors de l'assemblage par soudure des tôles minces, il se présente un risque très élevé de percement accidentel ainsi que des problèmes de dilatation sous l'apport important de chaleur qui a tendance à déformer les tôles à assembler et peut conférer à la boîte à eau assemblée un aspect visuel dégradé. L'opérateur effectuant les opérations de pliage et de soudure doit donc posséder une certaine dextérité, ce qui n'empêche pas une partie non négligeable des boîtes à eau assemblées par soudure d'être mises au rebut pour des problèmes de défaut d'étanchéité ou d'apparence esthétique dégradée.

Il se présente en outre un fort inconvénient lors du stockage. En effet, les opérations de pliage et d'assemblage étant relativement longues, il est nécessaire de stocker des boîtes à eau une fois assemblées afin de pouvoir répondre de façon satisfaisante en terme de délai aux commandes passées par les clients. Mais les boîtes à eau une fois assemblées présentent un encombrement important, ce qui induit un coût de stockage important qui est irrémédiablement répercuté sur le prix payé par le consommateur final.

Un premier problème proposé par l'invention est de concevoir une boîte à eau simple à fabriquer, limitant le recours à la soudure, ne nécessitant aucune dextérité particulière de la part de l'opérateur pour son assemblage, et ne nécessitant qu'un temps d'assemblage très réduit.

Un deuxième problème proposé par l'invention est de concevoir une boîte à eau qui peut être fabriquée de façon simple et rapide à partir d'éléments préfabriqués facilement industrialisables et présentant, avant assemblage, un encombrement très réduit afin d'en faciliter le stockage et la manutention.

Enfin, l'invention cherche en outre à concevoir une boîte à eau à tenue améliorée dans le temps malgré l'utilisation d'une épaisseur réduite de métal permettant de baisser le coût matière de la boîte à eau.

Pour atteindre ces objets ainsi que d'autres, l'invention propose un dispositif de collecte d'eau pluviale de type boîte à eau comprenant un conteneur creux ouvert selon une face d'ouverture principale et délimitant une cavité entre une paroi de fond et une paroi périphérique latérale, la paroi de fond étant munie d'un orifice d'évacuation, dans lequel :
- la paroi périphérique latérale est formée d'une plaque, s'étendant entre deux extrémités libres jointes l'une à l'autre par des moyens de jonction, et pliée selon une succession de lignes de pliure, - ladite plaque est en un matériau composite comprenant deux couches solidaires l'une de l'autre, à savoir une première couche constituée par une première feuille métallique et une deuxième couche comportant une épaisseur de matière plastique, la première couche étant disposée à l'extérieur du conteneur,
- ladite plaque comporte des premières rainures ménagées dans la deuxième couche le long des lignes de pliure,
- ladite plaque comporte une deuxième rainure périphérique ménagée dans la deuxième couche et recevant le bord périphérique de la paroi de fond.

L'assemblage d'une telle boîte à eau est simple, rapide, ne nécessite aucun outil spécifique, et ne requiert aucune dextérité particulière de la part de l'opérateur.

Avant sa mise en forme, le dispositif de collecte d'eau pluviale selon l'invention se présente sous la forme d'une plaque plane destinée à former après pliage la paroi périphérique latérale, et d'une plaque plane destinée à former la paroi de fond. Ces éléments plans présentent un encombrement réduit et sont facilement stockables et manutentionnables.

De préférence, la matière plastique de la deuxième couche peut être du polyéthylène. Le polyéthylène est facile à usiner pour la réalisation des première et deuxième rainures, peu onéreux et présente en outre une excellente stabilité lorsqu'il est exposé aux intempéries extérieures.

Avantageusement, pour une étanchéité parfaite, on peut prévoir des moyens d'étanchéité rapportés dans les premières rainures et/ou dans la liaison entre la paroi périphérique latérale et la paroi de fond et/ou au niveau de la jonction des extrémités libres de la plaque.

De préférence, les moyens de jonction peuvent comporter au moins une languette et une encoche de retenue de languette disposées en correspondance aux extrémités libres de la plaque. De tels moyens de jonction sont simples et efficaces tout en présentant une résistance mécanique et une fiabilité d'assemblage satisfaisantes.

Avantageusement, les moyens de jonction peuvent comporter des zones de réduction d'épaisseur destinées à venir à recouvrement l'une de l'autre et dimensionnées de façon à ce que leur recouvrement mutuel présente une épaisseur sensiblement égale à l'épaisseur maximale de la plaque. La paroi périphérique latérale conserve ainsi une même épaisseur sur toute sa longueur. En outre, l'étanchéité au niveau de la zone de jonction est accrue par un trajet en zigzag réduisant efficacement les risques de fuite.

De préférence, on peut prévoir que :
- les moyens de jonction comportent une feuillure à l'une des extrémités libres de la plaque, conformée de façon à recevoir l'autre des extrémités libres,
- les extrémités libres sont jointes en formant entre elles un angle, de préférence un angle d'environ 90°.

De tels moyens de jonction procurent une rigidité améliorée du conteneur creux, qui semble visuellement être fabriqué en un seul matériau (celui de la première couche) continu sur toute la périphérie du conteneur creux. Les caractéristiques mécaniques et l'apparence visuelle s'en trouvent donc améliorées.

De préférence, la première feuille métallique peut présenter une épaisseur comprise entre environ 0,3 mm et environ 1,5 mm.

Avantageusement, la deuxième couche peut comprendre une deuxième feuille métallique recouvrant l'épaisseur de matière plastique qui est ainsi prise en sandwich entre les première et deuxième feuilles métalliques. L'utilisation d'une deuxième feuille métallique permet une meilleure rigidité et augmente notamment la fiabilité de l'encastrement de la paroi de fond dans la deuxième rainure périphérique.

La deuxième feuille métallique peut présenter une épaisseur comprise entre environ 0,3 mm et environ 1,5 mm.

Avantageusement, l'épaisseur de matière plastique de la deuxième couche peut être d'environ 1,5 mm à environ 5 mm.

De préférence, on peut prévoir que :
- le dispositif de collecte d'eau pluviale comporte un tuyau d'évacuation connecté à l'orifice d'évacuation par des moyens de connexion et venant en appui contre une face inférieure de la paroi de fond,
- les moyens de connexion comportent une bague de retenue à épanouissement radial venant en appui contre une face supérieure de la paroi de fond et se prolongeant par un tronçon tubulaire traversant la paroi de fond à travers l'orifice d'évacuation, lequel tronçon tubulaire est muni d'une extrémité de liaison coopérant avec le tuyau d'évacuation pour le retenir.

Le dispositif de collecte d'eau pluviale est ainsi muni d'un tuyau d'évacuation fixé sans avoir recours à une soudure et sans détériorer la plaque de fond qui peut ainsi être dans le même matériau que la paroi périphérique latérale pour une harmonie visuelle satisfaisante.

De préférence, la coopération entre l'extrémité de liaison et le tuyau d'évacuation peut se faire par liaison vissée, par engagement en force, par encliquetage, par engagement à baïonnettes, ou par collage.

Les liaisons par vissage ou par engagement à baïonnettes sont bien adaptées aux tuyaux d'évacuation à section transversale circulaire.

Les liaisons par engagement en force, par encliquetage et par collage sont également convenables pour des tuyaux d'évacuation à section transversale circulaire, mais peuvent également être utilisables pour des tuyaux d'évacuation à section transversale non circulaire, par exemple rectangulaire.

Selon un autre aspect, la présente invention propose un kit de fabrication d'un dispositif de collecte d'eau pluviale de type boîte à eau à conteneur creux ouvert selon une face d'ouverture principale, dans lequel :
- le kit comprend une paroi de fond munie d'un orifice d'évacuation,
- le kit comprend une plaque plane s'étendant entre deux extrémités libres destinées à être rendues solidaires l'une de l'autre par des moyens de jonction,
- ladite plaque est en un matériau composite comprenant deux couches solidaires l'une de l'autre, à savoir une première couche constituée par une première feuille métallique et une deuxième couche comportant une épaisseur de matière plastique,
- ladite plaque comporte des premières rainures ménagées dans la deuxième couche et de profondeur autorisant le pliage de la plaque pour former la paroi périphérique latérale d'un conteneur,
- ladite plaque comporte une deuxième rainure ménagée dans la deuxième couche, s'étendant entre les deux extrémités libres de la plaque et destinée à recevoir le bord périphérique de la paroi de fond.

Selon un autre aspect, la présente invention propose un procédé de fabrication, à partir d'un kit de fabrication tel que décrit ci-dessus, d'un dispositif de collecte d'eau pluviale de type boîte à eau à conteneur creux ouvert selon une face d'ouverture principale, comprenant les étapes suivantes :
a) plier la plaque en matériau composite selon les premières rainures en engageant le bord périphérique de la paroi de fond dans la deuxième rainure,
b) joindre les extrémités libres de la plaque à l'aide des moyens de jonction.

De préférence, le procédé de fabrication peut comporter une étape c) au cours de laquelle sont disposés des moyens d'étanchéité dans les premières rainures etlou dans la liaison entre la paroi périphérique latérale et la paroi de fond et/ou au niveau de la jonction des extrémités libres de la plaque.

D'autres objets, caractéristiques et avantages de la présente invention ressortiront de la description suivante de modes de réalisation particuliers, faite en relation avec les figures jointes, parmi lesquelles :
- la figure 1 est une vue de dessus avant assemblage d'un kit de fabrication d'un dispositif de collecte d'eau pluviale selon l'invention ;
- la figure 2 est une vue de côté d'un élément du kit de fabrication de la figure 1 ;
- la figure 3 est une vue en perspective de la face avant d'un dispositif de collecte d'eau pluviale selon l'invention, fabriqué à l'aide du kit de fabrication de la figure 1 ;
- la figure 4 est une vue en perspective de la face arrière du dispositif de collecte d'eau pluviale de la figure 3 ; -
- la figure 5 est une vue de dessus du dispositif de collecte d'eau pluviale de la figure 3 ;
- la figure 6 est une vue en coupe verticale du dispositif de collecte d'eau pluviale des figures 3 à 5 selon un premier plan de coupe ;
- la figure 7 est une vue de détail de la figure 6 ;
- la figure 8 est une vue de détail en coupe verticale du dispositif de collecte d'eau pluviale des figures 3 à 6 selon un deuxième plan de coupe ;
- la figure 9 est une vue de détail en coupe horizontale du dispositif de collecte d'eau pluviale des figures 3 à 6 selon un troisième plan de coupe ;
- les figures 10 à 13 sont des vues en perspective de différentes formes de dispositifs de collecte d'eau pluviale selon l'invention ;
- les figures 14 et 15 sont deux vues en perspective illustrant divers moyens de jonction ;
- la figure 16 est une vue partielle de dessus illustrant d'autres moyens de jonction ; et
- la figure 17 est une vue détaillée partielle en perspective de la face avant d'un dispositif de collecte d'eau pluviale selon l'invention.

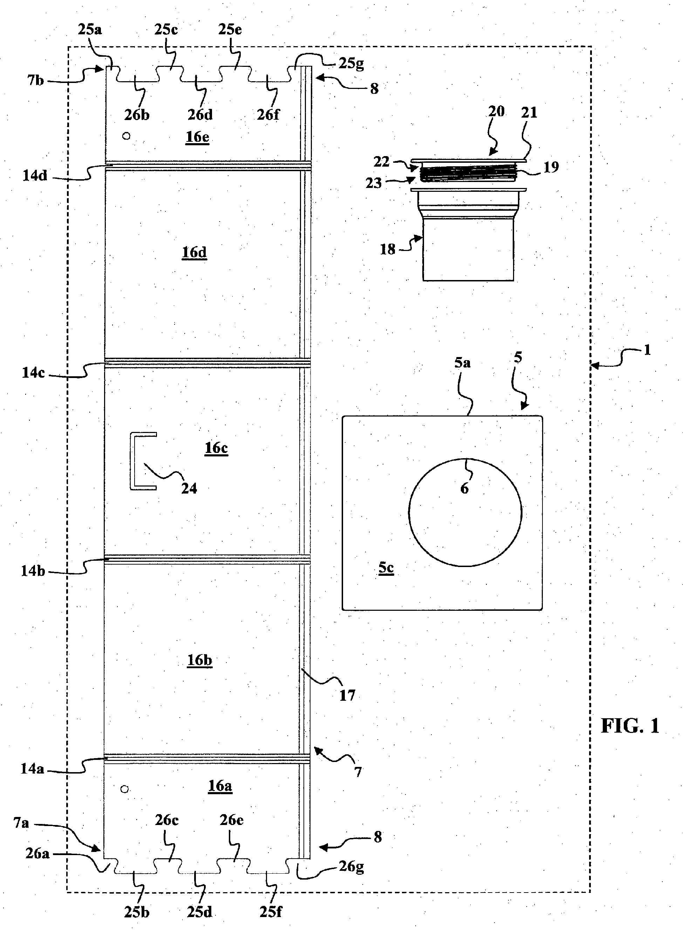

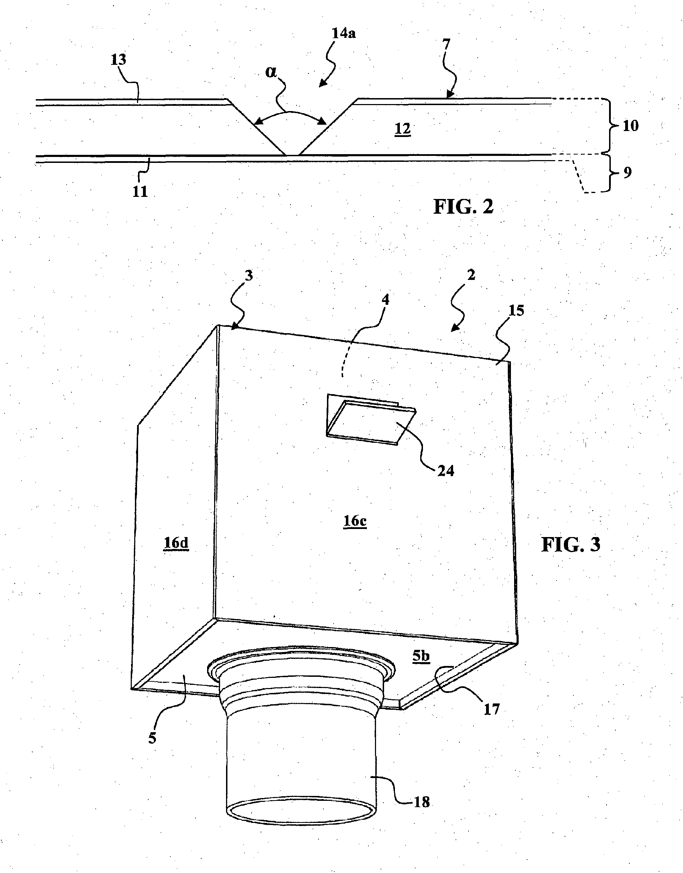

Sur la figure 1 est illustré un mode de réalisation particulier de kit 1 de fabrication d'un dispositif de collecte d'eau pluviale 2 de type boîte à eau, tel qu'illustré sur les figures 3 à 6, à conteneur 3 creux ouvert selon une face d'ouverture principale 4.

Le kit 1 comprend une paroi de fond 5 munie d'un orifice d'évacuation 6 et comprend une plaque 7 plane allongée s'étendant entre deux extrémités longitudinales libres 7a et 7b destinées à être rendues solidaires l'une de l'autre par des moyens de jonction 8. On voit plus particulièrement sur la figure 2 que ladite plaque 7 est en un matériau composite comprenant deux couches 9 et 10 solidaires l'une de l'autre, à savoir une première couche 9 constituée par une première feuille métallique 11 et une deuxième couche 10 comportant une épaisseur 12 de matière plastique. Dans le mode de réalisation particulier illustré, la deuxième couche 10 comprend également une deuxième feuille métallique 13 recouvrant l'épaisseur de matière plastique 12 qui est ainsi prise en sandwich entre les première et deuxième feuilles métalliques 11 et 13. La composition de l'épaisseur de matière plastique 12 est du polyéthylène.

Un matériau composite pouvant constituer la plaque 7 est disponible dans le commerce et est par exemple vendu sous la marque REYNOBOND® par la société ALCOA Inc.

On voit sur la figure 1 que la plaque 7 comporte une succession de premières rainures 14a à 14d ménagées dans la deuxième couche 10 et de profondeur autorisant le pliage de la plaque 7 pour former la paroi périphérique latérale 15 du conteneur 3 du dispositif de collecte d'eau pluviale 2.

La première rainure 14a est plus particulièrement visible sur la figure 2. Sur cette figure, la rainure 14a présente un profil transversal sensiblement en forme de V à angle d'ouverture α dépendant de l'angle de pliage à réaliser de la plaque 7. Dans le cas du kit 1 de la figure 1 pour la fabrication du dispositif de collecte d'eau pluviale 2 des figures 3 à 6, l'angle α est d'environ 90°.

Il est à noter que la deuxième couche 10 n'est pas nécessairement enlevée selon toute son épaisseur lors de la réalisation des rainures 14a à 14d : il suffit que la profondeur des premières rainures 14a à 14d autorise un pliage satisfaisant de la plaque 7.

Les premières rainures 14a à 14d sont parallèles et divisent la plaque 7 en cinq volets successifs 16a à 16e.

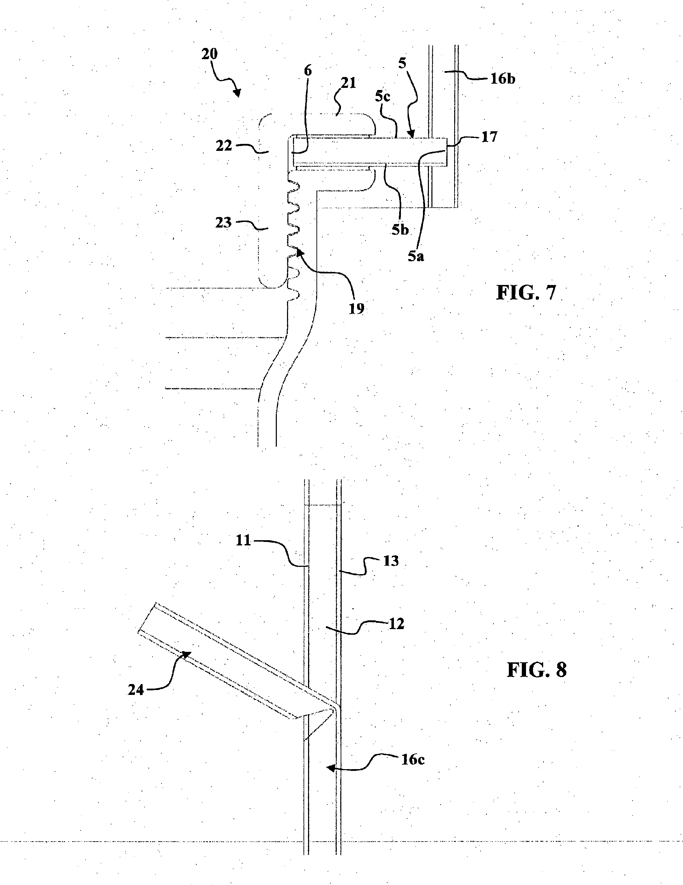

On voit également sur la figure 1 que la plaque 7 comporte une deuxième rainure 17 ménagée dans la deuxième couche 10 et s'étendant entre les deux extrémités libres 7a et 7b de la plaque 7. La deuxième rainure 17 est destinée à recevoir le bord périphérique 5a de la paroi de fond 5. La deuxième rainure 17 est plus particulièrement visible sur la figure 8. La profondeur de la deuxième rainure 17 peut être inférieure ou égale à l'épaisseur de la deuxième couche 10.

Sur la figure 1, le kit 1 de fabrication comporte également un tuyau d'évacuation 18 destiné à être connecté à l'orifice d'évacuation 6 par des moyens de connexion 19 en venant en appui contre une face inférieure 5b de la paroi de fond 5 (figure 3).

Les moyens de connexion 19 comportent une bague de retenue 20 à épanouissement radial 21 destiné à venir en appui contre une face supérieure 5c de la paroi de fond 5 et se prolongeant par un tronçon tubulaire 22 destiné à traverser la paroi de fond 5 à travers l'orifice d'évacuation 6. Le tronçon tubulaire 22 est muni d'une extrémité de liaison 23 destinée à coopérer avec le tuyau d'évacuation 18 pour le retenir.

Le tuyau d'évacuation 18 et la bague de retenue 20 sont facultatifs dans le kit 1 de fabrication et peuvent être fournis indépendamment de celui-ci en fonction du diamètre de tuyau d'évacuation 18 nécessaire. Le kit 1 de fabrication se présente ainsi sous une forme sensiblement plane et occupe donc un espace réduit pour son stockage.

En alternative, le kit 1 peut comprendre une paroi de fond 5 et un tuyau d'évacuation formés d'une seule pièce ou préalablement assemblés par tout type de liaison (y compris par soudure éventuellement).

Pour fabriquer à partir du kit 1 de fabrication un dispositif de collecte d'eau pluviale 2 de type boîte à eau tel qu'illustré sur les figures 3 à 6, un opérateur commence tout d'abord par plier manuellement la plaque 7 selon les lignes de pliage définies par les premières rainures 14b et 14c prévues entre les volets 16b, 16c et 16d. La plaque 7 se présente ainsi sous la forme d'un U et l'opérateur peut alors aisément engager le bord périphérique 5a de la paroi de fond 5 dans la deuxième rainure 17 des volets 16b, 16c et 16d.

L'opérateur rabat ensuite les volets 16a et 16e pour joindre les extrémités libres 7a et 7b, ce qui a pour effet d'engager le bord périphérique 5a de la paroi de fond 5 dans la deuxième rainure 17 des volets 16a et 16e. Les moyens de jonction 8 maintiennent les extrémités libres 7a et 7b jointes l'une à l'autre. La plaque 7 forme ainsi la paroi périphérique latérale 15 du conteneur 3 illustré sur les figures 3 à 6.

L'opérateur dispose des moyens d'étanchéité dans les premières rainures 14a à 14d et/ou dans la liaison entre la paroi périphérique latérale 15 et la paroi de fond 5 et/ou au niveau de la jonction des extrémités libres 7a et 7b de la plaque 7. Les moyens d'étanchéité peuvent consister en des joints souples ou en une matière d'étanchéification injectable telle que de la résine ou du silicone par exemple.

L'opérateur peut alors connecter le tuyau d'évacuation 18 à l'orifice d'évacuation 6. Pour ce faire, l'opérateur engage la bague de retenue 20 selon son tronçon tubulaire 22 à travers l'orifice d'évacuation 6 jusqu'à venir en appui avec l'épanouissement radial 21 contre la face supérieure 5c. L'opérateur engage alors le tuyau d'évacuation 18 sur le tronçon tubulaire 22 à extrémité de liaison 23 jusqu'à ce que le tuyau d'évacuation 18 vienne en appui contre la face inférieure 5b de la paroi de fond 5. Dans le mode de réalisation illustré sur les figures 1 à 9, le tuyau d'évacuation 18 est vissé sur le tronçon tubulaire 22. On pourrait toutefois envisager une liaison par un engagement en force, par encliquetage, par un engagement à baïonnettes et/ou par un collage.

La paroi de fond 5 est serrée axialement entre l'épanouissement radial 21 et le tuyau d'évacuation 18.

Il est à noter que le volet 16c comporte, sur la figure 1, une languette 24 destinée à être pliée vers l'extérieur du conteneur 3 comme illustré sur les figures 3 et 8 afin de procurer une évacuation de trop plein. La languette 24 peut toutefois n'être pliée que lors de la pose chez le client final afin de conserver une forme plane du volet 16c pour un stockage compact et un emballage et transport faciles.

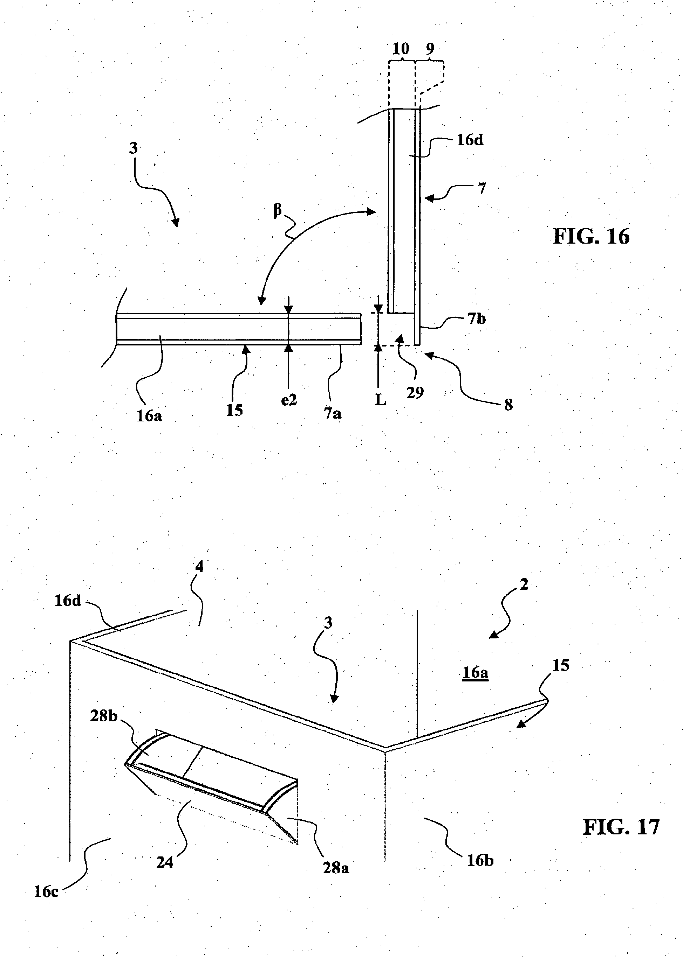

Sur la figure 17, on observe que sur la languette 24 on été rapportées (par collage par exemple) deux parois latérales 28a et 28b. Ces parois latérales 28a et 28b empêchent un écoulement d'eau hors du conteneur creux par ruissellement sur le volet 16c qui pourrait s'en trouver souillé et/ou détérioré à long terme. L'eau sortant du conteneur creux 3 par l'évacuation de trop plein s'écoulera ainsi par dessus la languette 24 et à l'écart du volet 16c.

A l'issue de ce procédé, on obtient le dispositif de collecte d'eau pluviale 2 de type boîte à eau tel qu'illustré sur les figures 3 à 6, comprenant le conteneur creux 3 ouvert selon une face d'ouverture principale 4 et délimitant une cavité entre la paroi de fond 5 et la paroi périphérique latérale 15, la paroi de fond 5 étant munie de son orifice d'évacuation 6. Dans ce dispositif de collecte d'eau pluviale 2 :
- la paroi périphérique latérale 15 est formée de la plaque 7, s'étendant entre les deux extrémités libres 7a et 7b jointes l'une à l'autre par les moyens de jonction 8, et pliée selon une succession de lignes de pliure,
- ladite plaque 7 est en un matériau composite comprenant deux couches 9 et 10 solidaires l'une de l'autre, à savoir la première couche 9 constituée par une première feuille métallique 11 et la deuxième couche 10 comportant une épaisseur de matière plastique 12, la première couche 9 étant disposée à l'extérieur du conteneur 3,

- ladite plaque 7 comporte des premières rainures 14a à 14d ménagées dans la deuxième couche 10 le long des lignes de pliure,
- ladite plaque 7 comporte une deuxième rainure périphérique 17 ménagée dans la deuxième couche 10 et recevant le bord périphérique 5a de la paroi de fond 5.

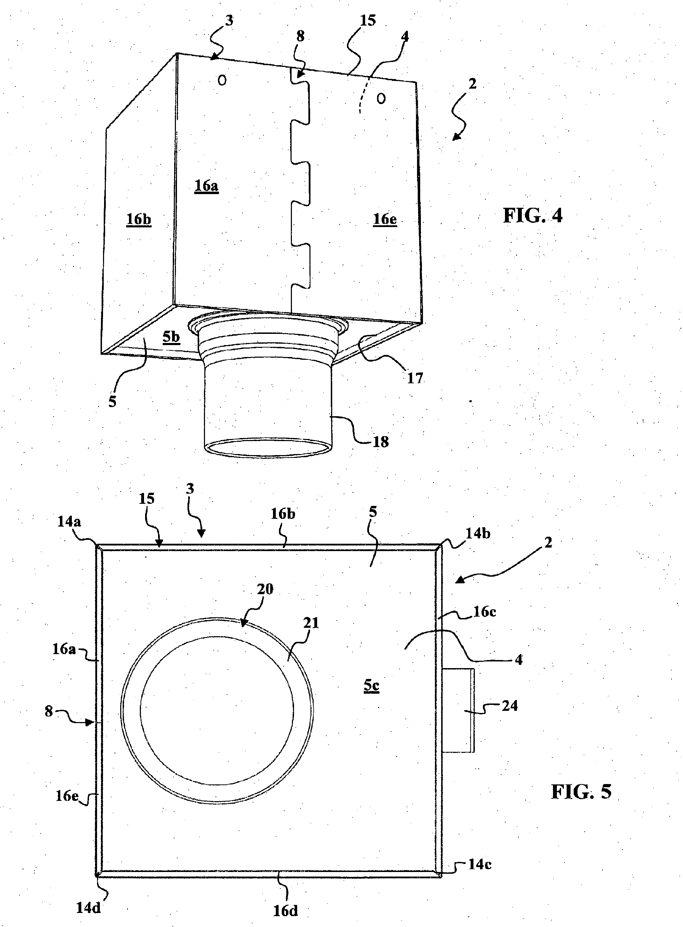

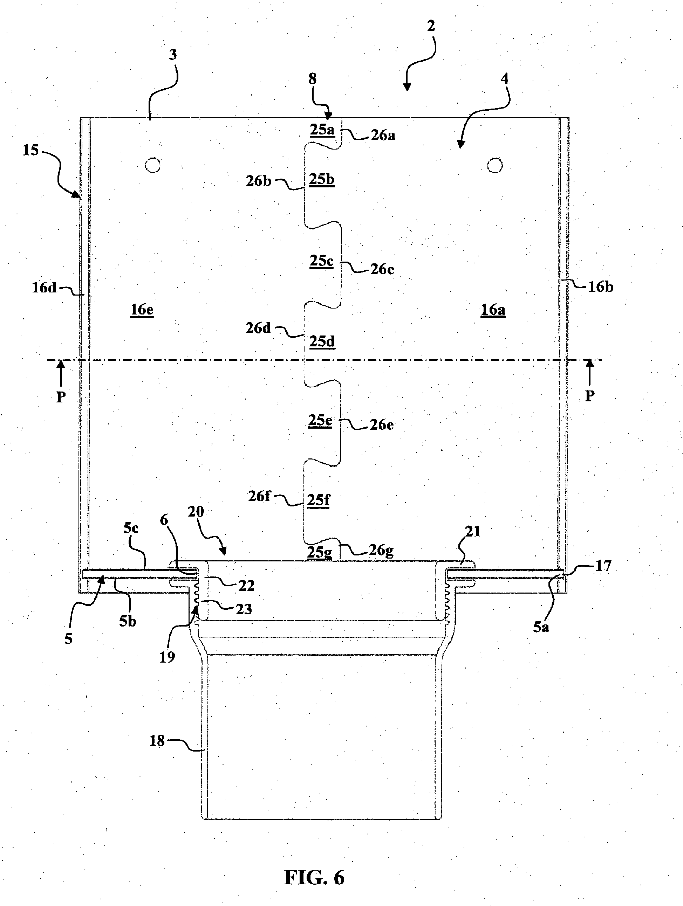

Des moyens de jonction 8 sont plus particulièrement visibles sur les figures 4 et 6 et comportent, dans ce mode de réalisation, une pluralité de languettes 25a à 25g coopérant avec une pluralité d'encoches de retenue de languettes 26a à 26g disposées en correspondance aux extrémités libres 7a et 7b de la plaque 7. Ces languettes 25a à 25g et encoches de retenue de languettes 26a à 26g permettent une jonction et un accrochage mécanique des volets 16a et 16e par complémentarité de forme à la façon d'un puzzle.

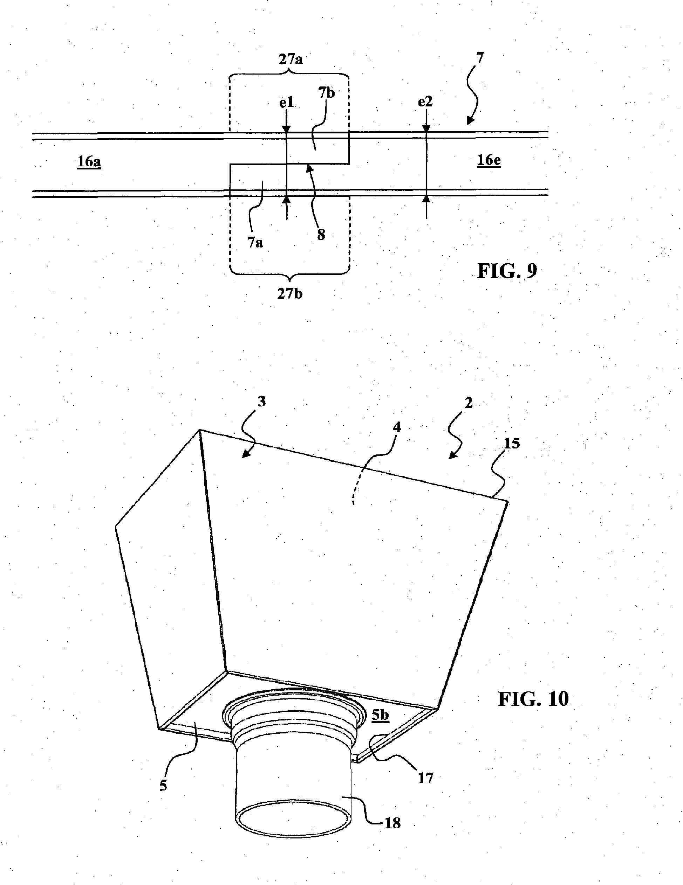

La figure 9 est une vue de détail en coupe des volets 16a et 16e selon le plan de coupe P illustré sur la figure 6 dans le cadre d'une variante des moyens de jonction 8. Sur la figure 9, on voit que les moyens de jonction 8 comportent des zones 27a et 27b de réduction d'épaisseur prévues aux extrémités libres 7a et 7b de la plaque 7, et destinées à venir à recouvrement l'une de l'autre en étant collées l'une à l'autre ou en étant mécaniquement accrochées l'une à l'autre comme sur les figures 4 et 6. Les zones de réduction 27a et 27b sont dimensionnées de façon à ce que leur recouvrement mutuel présente une épaisseur e1 sensiblement égale à l'épaisseur maximale e2 de la plaque 7. Pour qu'une fuite se produise à cet endroit, l'eau devra effectuer un parcours en zigzag de longueur plus importante.

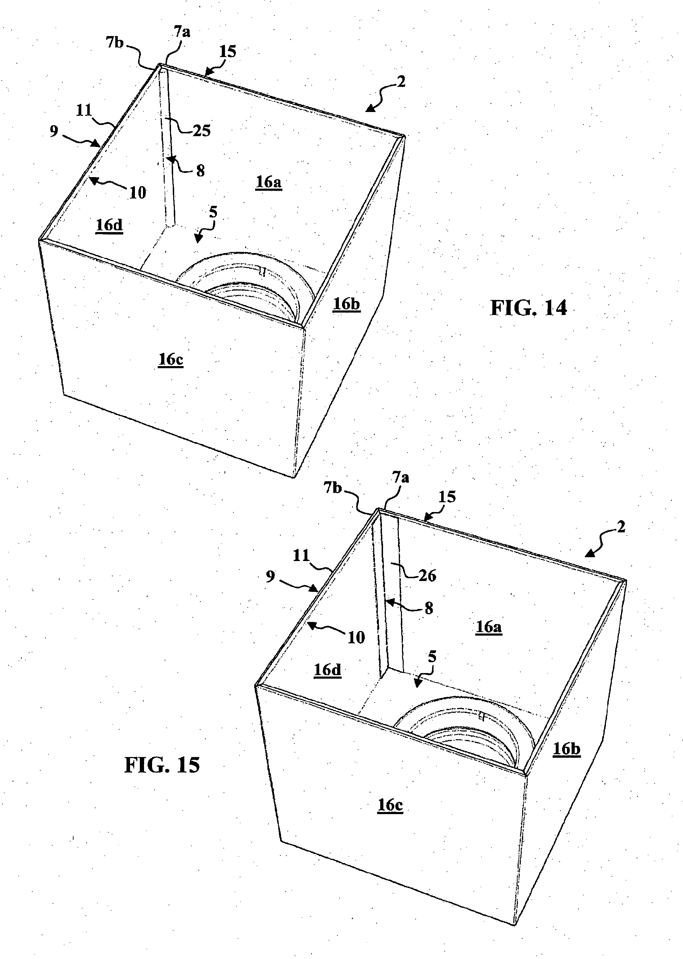

Sur les figures 14 et 15 sont illustrés d'autres moyens de jonction 8 particuliers. Ces moyens de jonction 8 solidarisent les extrémités libres 7a et 7b de la plaque 7 dans un angle de la paroi périphérique latérale 15. La plaque 7 comporte ainsi quatre volets 16a à 16d successifs repliés.

Sur la figure 14, les moyens de jonction 8 comprennent une soudure 25 de la deuxième couche 10 des extrémités libres 7a et 7b. Cette soudure 25 peut se faire par soudure de la matière plastique de la deuxième couche 10 entre les extrémités libres 7a et 7b. Un apport de matière plastique supplémentaire peut être nécessaire. Une telle soudure 25 est simple à réaliser et présente peu de risques d'endommager la première feuille métallique 11 de la première couche 9.

Sur la figure 15, les moyens de jonction 8 comprennent un profilé 26, en forme d'équerre à angle droit, rapporté et fixé aux extrémités libres 7a et 7b par tous moyens. Le profilé 26 peut par exemple être collé sur la deuxième couche 10 des extrémités libres 7a et 7b.

Sur la figure 16, les moyens de jonction 8 comportent une feuillure 29 réalisée par enlèvement de matière de la deuxième couche 10 sur l'extrémité libre 7b de la plaque 7. En l'espèce, la totalité de la deuxième couche 10 a été enlevée. La feuillure 29 présente une largeur L égale à l'épaisseur maximale e2 de la plaque 7. Les extrémités libres 7a et 7b peuvent ainsi être jointes selon un angle β qui est ici de 90°.

Après jonction, le conteneur creux 3 semble extérieurement fabriqué avec une paroi périphérique latérale 15 continue. Et la jonction des extrémités libres 7a et 7b permet au conteneur creux 3 de garder une bonne rigidité selon tous ses volets 16a à 16d.

La présente invention permet un gain économique important en divisant par trois le temps d'assemblage du dispositif de collecte d'eau pluviale 2. Etant donné sa simplicité et sa rapidité, il est en outre possible que cet assemblage soit effectué par le client final lui-même après l'envoi d'un colis de faible encombrement.

La fabrication de la plaque 7 et de la paroi de fond 5 peut quant à elle être industrialisée de façon efficace à l'aide d'automates.

D'excellents résultats ont été obtenus en utilisant une première feuille métallique (et éventuellement une deuxième feuille métallique) selon une épaisseur comprise entre environ 0,3 mm et environ 1,5 mm, en combinaison avec une épaisseur de matière plastique 12 comprise entre environ 1,5 mm et environ 5 mm.

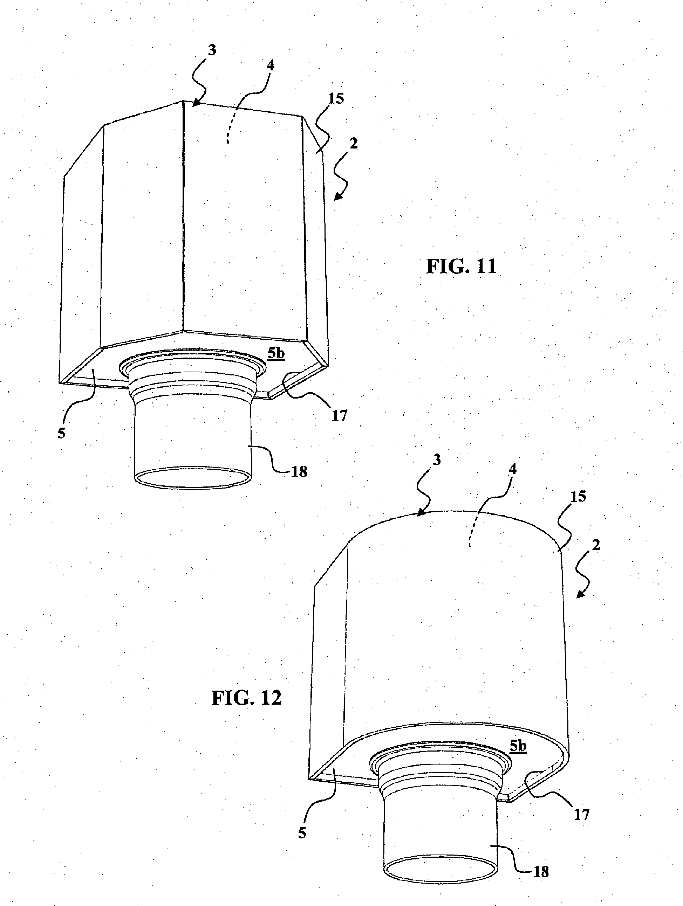

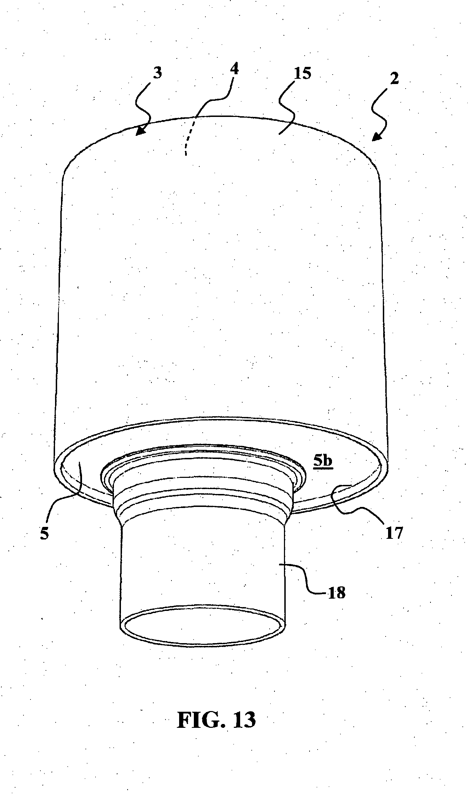

Les figures 10 à 13 illustrent d'autres exemples de forme réalisable selon l'invention. Dans les kits 1 permettant leur fabrication, il faut alors adapter le nombre de premières rainures, leurs positions et leurs angles d'ouverture. Par exemple, le kit permettant de réaliser la boîte à eau de la figure 10 doit comprendre une plaque formée d'une succession de trapèzes limités par des premières rainures non parallèles. Et dans le cas d'une paroi périphérique latérale 15 ayant un secteur arrondi (par exemple comme sur les figures 12 et 13), on prévoit une succession de premières rainures nombreuses, rapprochées et à angles d'ouverture adaptés.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de collecte d'eau pluviale (2) de type boîte à eau comprenant un conteneur creux (3) et délimitant une cavité entre une paroi de fond (5) et une paroi périphérique latérale (15), la paroi de fond (5) étant munie d'un orifice d'évacuation (6), **caractérisé en ce que** :
- le conteneur creux (3) est ouvert selon une face d'ouverture principale (4),
- la paroi périphérique latérale (15) est formée d'une plaque (7), s'étendant entre deux extrémités libres (7a, 7b) jointes l'une à l'autre par des moyens de jonction (8), et pliée selon une succession de lignes de pliure,
- ladite plaque (7) est en un matériau composite comprenant deux couches (9, 10) solidaires l'une de l'autre, à savoir une première couche (9) constituée par une première feuille métallique (11) et une deuxième couche (10) comportant une épaisseur de matière plastique (12), la première couche (9) étant disposée à l'extérieur du conteneur (3),
- ladite plaque (7) comporte des premières rainures (14a-14d) ménagées dans la deuxième couche (10) le long des lignes de pliure,
- ladite plaque (7) comporte une deuxième rainure périphérique (17) ménagée dans la deuxième couche (10) et recevant le bord périphérique (5a) de la paroi de fond (5).

2. Dispositif (2) selon la revendication 1, **caractérisé en ce que** la matière plastique de la deuxième couche (10) est du polyéthylène.

3. Dispositif (2) selon l'une des revendications 1 ou 2, **caractérisé en ce qu'**il comporte des moyens d'étanchéité rapportés dans les premières rainures (14a-14d) et/ou dans la liaison entre la paroi périphérique latérale (15) et la paroi de fond (5) et/ou au niveau de la jonction des extrémités libres (7a, 7b) de la plaque (7).

4. Dispositif (2) selon l'une quelconque des revendications 1 à 3, **caractérisé en ce que** les moyens de jonction (8) comportent au moins une languette (25a-25g) et une encoche (26a-26g) de retenue de languette disposées en correspondance aux extrémités libres (7a, 7b) de la plaque (7).

5. Dispositif (2) selon l'une quelconque des revendications 1 à 4, **caractérisé en ce que** les moyens de jonction (8) comportent des zones (27a-27b) de réduction d'épaisseur destinées à venir à recouvrement l'une de l'autre et dimensionnées de façon à ce que leur recouvrement mutuel présente une épaisseur (e1) sensiblement égale à l'épaisseur maximale (e2) de la plaque (7).

6. Dispositif (2) selon l'une quelconque des revendications 1 à 3, **caractérisé en ce que** :
- les moyens de jonction (8) comportent une feuillure (29) à l'une des extrémités libres (7a, 7b) de la plaque 7, conformée de façon à recevoir l'autre des extrémités libres (7a, 7b),
- les extrémités libres (7a, 7b) sont jointes en formant entre elles un angle (β), de préférence un angle (β) d'environ 90°.

7. Dispositif (2) selon l'une quelconque des revendications 1 à 6, **caractérisé en ce que** la première feuille métallique (11) présente une épaisseur comprise entre environ 0,3 mm et environ 1,5 mm.

8. Dispositif (2) selon l'une quelconque des revendications 1 à 7, **caractérisé en ce que** la deuxième couche (10) comprend une deuxième feuille métallique (13) recouvrant l'épaisseur de matière plastique (12) qui est ainsi prise en sandwich entre les première (11) et deuxième (13) feuilles métalliques.

9. Dispositif (2) selon la revendication 8, **caractérisé en ce que** la deuxième feuille métallique (13) présente une épaisseur comprise entre environ 0,3 mm et environ 1,5 mm.

10. Dispositif (2) selon l'une quelconque des revendications 1 à 9, **caractérisé en ce que** l'épaisseur de matière plastique (12) de la deuxième couche (10) est d'environ 1,5 mm à environ 5 mm.

11. Dispositif (2) selon l'une quelconque des revendications 1 à 10, **caractérisé en ce que** :
- il comporte un tuyau d'évacuation (18) connecté à l'orifice d'évacuation (6) par des moyens de connexion (19) et venant en appui contre une face inférieure (5b) de la paroi de fond (5),
- les moyens de connexion (19) comportent une bague de retenue (20) à épanouissement radial (21) venant en appui contre une face supérieure (5c) de la paroi de fond (5) et se prolongeant par un tronçon tubulaire (22) traversant la paroi de fond (5) à travers l'orifice d'évacuation (6), lequel tronçon tubulaire (22) est muni d'une extrémité de liaison (23) coopérant avec le tuyau d'évacuation (18) pour le retenir.

12. Dispositif (2) selon la revendication 11, **caractérisé en ce que** la coopération entre l'extrémité de liaison (23) et le tuyau d'évacuation (18) se fait par liaison vissée, par engagement en force, par encliquetage, par engagement à baïonnettes, ou par collage.

13. Kit (1) de fabrication d'un dispositif de collecte d'eau pluviale (2) de type boîte à eau à conteneur (3) creux ouvert selon une face d'ouverture principale (4), **caractérisé en ce que** :
- il comprend une paroi de fond (5) munie d'un orifice d'évacuation (6),
- il comprend une plaque (7) plane s'étendant entre deux extrémités libres (7a, 7b) destinées à être rendues solidaires l'une de l'autre par des moyens de jonction (8),
- ladite plaque (7) est en un matériau composite comprenant deux couches (9, 10) solidaires l'une de l'autre, à savoir une première couche (9) constituée par une première feuille métallique (11) et une deuxième couche (10) comportant une épaisseur (12) de matière plastique,
- ladite plaque (7) comporte des premières rainures (14a-14d) ménagées dans la deuxième couche (10) et de profondeur autorisant le pliage de la plaque (7) pour former la paroi périphérique latérale (15) d'un conteneur (3),
- ladite plaque (7) comporte une deuxième rainure (17) ménagée dans la deuxième couche (10), s'étendant entre les deux extrémités libres (7a, 7b) de la plaque (7) et destinée à recevoir le bord périphérique (5a) de la paroi de fond (5).

14. Kit (1) de fabrication selon la revendication 13, **caractérisé en ce que** :
- il comporte un tuyau d'évacuation (18) destiné à être connecté à l'orifice d'évacuation (6) par des moyens de connexion (19) en venant en appui contre une face inférieure (5b) de la paroi de fond (5),
- les moyens de connexion (19) comportent une bague de retenue (20) à épanouissement radial (21) destiné à venir en appui contre une face supérieure (5c) de la paroi de fond (5) et se prolongeant par un tronçon tubulaire (22) destiné à traverser la paroi de fond (5) à travers l'orifice d'évacuation (6), lequel tronçon tubulaire (22) est muni d'une extrémité de liaison (23) destinée à coopérer avec le tuyau d'évacuation (18) pour le retenir.

15. Procédé de fabrication, à partir d'un kit (1) selon l'une des revendications 13 ou 14, d'un dispositif de collecte d'eau pluviale (2) de type boîte à eau à conteneur (3) creux ouvert selon une face d'ouverture principale (4), **caractérisé en ce qu'**il comprend les étapes suivantes :
a) plier la plaque (7) en matériau composite selon les premières rainures (14a-14d) en engageant le bord périphérique (5a) de la paroi de fond (5) dans la deuxième rainure (17),
b) joindre les extrémités libres (7a, 7b) de la plaque (7) à l'aide des moyens de jonction (8).

16. Procédé de fabrication selon la revendication 15, **caractérisé en ce qu'**il comporte une étape c) au cours de laquelle sont disposés des moyens d'étanchéité dans les premières rainures (14a-14d) et/ou dans la liaison entre la paroi périphérique latérale (15) et la paroi de fond (5) et/ou au niveau de la jonction des extrémités libres (7a-7b) de la plaque (7).

## Patentansprüche

1. Vorrichtung zum Sammeln von Regenwasser (2) nach Art eines Wasserbehälters mit einem leeren Container (3), der eine Ausnehmung zwischen einer Bodenwand (5) und einer Umfangsseitenwand (15) begrenzt, wobei die Bodenwand (5) mit einer Austrittsöffnung (6) ausgestattet ist,
**dadurch gekennzeichnet, dass**:
- der leere Container (3) an einer Fläche für eine Hauptöffnung (4) geöffnet ist,
- die Umfangsseitenwand (15) aus einer Platte (7) geformt ist, die sich zwischen zwei freien Enden (7a, 7b), die miteinander über Verbindungsmittel (8) verbunden sind, erstreckt und die an einer Reihe von Biegelinien gebogen ist,
- die genannte Platte (7) aus einem Kompositmaterial, das zwei miteinander verbundene Schichten (9, 10) enthält, wobei eine erste Schicht (9) aus einer ersten metallischen Folie (11) gefertigt ist und eine zweite Schicht (10) eine Lage aus Plastikmaterial (12) umfasst, wobei die erste Schicht (9) zur Außenseite des Containers (3) angeordnet ist,
- die genannte Platte (7) erste Kerben (14a-14d) umfasst, die durch die zweite Schicht (10) entlang von Biegelinien verlaufen,
- die genannte Platte (7) eine zweite äußere Kerbe (17) umfasst, die durch die zweite Schicht (10) verläuft und die Umfangskante (5a) der Bodenwand (5) aufnimmt.

2. Vorrichtung (2) nach Anspruch 1, **dadurch gekennzeichnet, dass** das Plastikmaterial der zweiten Schicht (10) aus einem Polyethylen ist.

3. Vorrichtung (2) nach einem der Ansprüche 1 oder 2, **dadurch gekennzeichnet, dass** sie Dichtmittel umfasst, die in die ersten Kerben (14a-14d) und/oder im Anschluss der Umfangsseitenwand (15) an die Bodenwand (5) und/oder auf der Höhe der Verbindung der freien Enden (7a, 7b) der Platte (7) eingebracht sind.

4. Vorrichtung (2) nach einem der Ansprüche 1 bis 3, **dadurch gekennzeichnet, dass** die Verbindungsmittel (8) aus wenigstens einer Zunge (25a-25g) und einem zurückspringenden Zungeneinschnitt (26a-26g) besteht, die zueinander passend an den freien Enden (7a, 7b) der Platte (7) angeordnet sind.

5. Vorrichtung (2) nach einem der Ansprüche 1 bis 4, **dadurch gekennzeichnet, dass** die Verbindungsmittel (8) Bereiche (27a-27b) verringerter Dicke umfassen, die eingerichtet sind, sich beim Zusammensetzen einander zu überdecken und die derart ausgelegt sind, dass ihre gegenseitige Überdeckung eine Dicke (e1) ergibt, die im Wesentlichen gleich der maximalen Dicke (e2) der Platte (7) ist.

6. Vorrichtung (2) nach einem der Ansprüche 1 bis 3, **dadurch gekennzeichnet, dass**:
- die Verbindungsmittel (8) einen Falz (29) an einem der freien Enden (7a, 7b) der Platte 7 umfassen, der derart passend ist, um das andere der freien Enden (7a, 7b) aufzunehmen,
- die freien Enden (7a, 7b) miteinander derart verbunden sind, dass sie zwischen sich einen Winkel (β), vorzugsweise einen Winkel (β) im Bereich von 90° bilden.

7. Vorrichtung (2) nach einem der Ansprüche 1 bis 6, **dadurch gekennzeichnet, dass** die metallische erste Folie (11) eine Dicke aufweist, die zwischen ungefähr 0,3 mm und ungefähr 1,5 mm umfasst.

8. Vorrichtung (2) nach einem der Ansprüche 1 bis 7, **dadurch gekennzeichnet, dass** die zweite Schicht (10) eine zweite metallische Folie (13) enthält, die die Lage aus Plastikmaterial (12) überdeckt, die auf diese Weise zwischen der ersten (11) und der zweiten (13) metallischen Folien gehalten und eingesetzt ist.

9. Vorrichtung (2) nach Anspruch 8, **dadurch gekennzeichnet, dass** die zweite metallische Folie (13) eine Dicke aufweist, die zwischen ungefähr 0,3 mm und ungefähr 1,5 mm umfasst.

10. Vorrichtung (2) nach einem der Ansprüche 1 bis 9, **dadurch gekennzeichnet, dass** die Lage aus Plastikmaterial (12) der zweiten Schicht (10) von ungefähr 1,5 mm bis ungefähr 5 mm dick ist.

11. Vorrichtung (2) nach einem der Ansprüche 1 bis 10, **dadurch gekennzeichnet, dass**:
- sie ein Austrittsrohr (18) umfasst, das an die Austrittsöffnung (6) mit Anschlussmitteln (19) angebunden und gegen eine untere Seite (5b) der Bodenwand (5) gestützt ist,
- wobei die Anschlussmittel (19) einen Rückhaltering (20) mit einem radialen Flansch (21) umfassen, der gegen eine obere Seite (5c) der Bodenwand (5) gestützt ist, und der sich in einem Rohrstück (22) erstreckt, das die Bodenwand (5) durch die Austrittsöffnung (6) durchdringt, wobei das Rohrstück (22) mit einem Anschlussende (23) ausgestattet ist, das mit dem Austrittsrohr (18) für die Rückhaltung zusammenwirkt.

12. Vorrichtung (2) nach Anspruch 11, **dadurch gekennzeichnet, dass** die Zusammenwirkung zwischen dem Anschlussende (23) und dem Austrittsrohr (18) durch einen Schraubanschluss, durch einen Kraftschluss, durch eine Verrastung, durch einen Bajonettverschluss oder durch eine Verklebung gefertigt ist.

13. Bausatz (1) zur Herstellung einer Vorrichtung zum Sammeln von Regenwasser (2) nach Art eines Wasserbehälters eines leeren Containers (3), der an einer Fläche für eine Hauptöffnung (4) geöffnet ist, **dadurch gekennzeichnet, dass** :
- er eine Bodenwand (5) enthält, die mit einer Austrittsöffnung (6) ausgestattet ist,
- er eine ebene Platte (7) enthält, die sich zwischen zwei freien Enden (7a, 7b), die miteinander über Verbindungsmittel (8) verbunden sind, erstreckt,
- die genannte Platte (7) aus einem Kompositmaterial, das zwei miteinander verbundene Schichten (9, 10) enthält, wobei eine erste Schicht (9) aus einer ersten metallischen Folie (11) gefertigt ist und eine zweite Schicht (10) eine Lage aus Plastikmaterial (12) umfasst,
- die genannte Platte (7) erste Kerben (14a-14d), die durch die zweite Schicht (10) verlaufen, und eine Dicke umfasst, die die Biegung der Platte (7) zur Formung der Umfangsseitenwand (15) zu einem Container (3) ermöglicht,
- die genannte Platte (7) eine zweite Kerbe (17) umfasst, die durch die zweite Schicht (10) verläuft, die sich in die zwei freien Enden (7a, 7b) der Platte (7) ausdehnt und die ausgebildet ist, die Umfangskante (5a) der Bodenwand (5) aufzunehmen.

14. Bausatz (1) nach Anspruch 13, **dadurch gekennzeichnet, dass** :
- er eine Austrittsöffnung (18) umfasst, das eingerichtet ist, an die Austrittsöffnung (6) mit Anschlussmitteln (19) angebunden und gegen eine untere Seite (5b) der Bodenwand (5) gestützt ist,
- wobei die Anschlussmittel (19) einen Rückhaltering (20) mit einem radialen Flansch (21) umfassen, der eingerichtet ist, gegen eine obere Seite (5c) der Bodenwand (5) gestützt zu werden, und der sich in einem Rohrstück (22) erstreckt, das eingerichtet ist, die Bodenwand (5) durch die Austrittsöffnung (6) zu durchdringen, wobei das Rohrstück (22) mit einem Anschlussende (23) ausgestattet ist, das eingerichtet ist, mit dem Austrittsrohr (18) für die Rückhaltung zusammen zu wirken.

15. Verfahren zur Herstellung aus einem Bausatz (1) nach einem der Ansprüche 13 oder 14 einer Vorrichtung zum Sammeln von Regenwasser (2) nach Art eines Wasserbehälters eines leeren Containers (3), der an einer Fläche für eine Hauptöffnung (4) geöffnet ist, **dadurch gekennzeichnet, dass** es die nachstehenden Schritte enthält:
a) Biegen der Platte (7) aus Kompositmaterial entlang der ersten Kerben (14a-14d) unter Einsetzen der Umfangskante (5a) der Bodenwand (5) in die zweite Kerbe (17),
b) Verbinden der äußeren Enden (7a, 7b) der Platte (7) mit der Hilfe von Verbindungsmitteln (8).

16. Verfahren zur Herstellung nach Anspruch 15, **dadurch gekennzeichnet, dass** es einen Schritt c) umfasst, wobei in den ersten Kerben (14a-14d) und/oder im Anschluss der Umfangsseitenwand (15) an die Bodenwand (5) und/oder auf Höhe der Verbindung der freien Enden (7a-7b) der Platte (7) Dichtmittel angeordnet sind.

## Claims

1. Rainwater collection device (2) of the water bank type comprising a hollow container (3) delimiting a cavity between a bottom wall (5) and a lateral peripheral wall (15), the bottom wall (5) being provided with a discharge orifice (6),
**characterised in that**:
- the hollow container (3) is open at a main opening face (4),
- the lateral peripheral wall (15) is formed of a panel (7) extending between two free ends (7a, 7b) which are joined together by joining means (8) and which is folded along a succession of fold lines,
- said panel (7) is made of a composite material comprising two layers (9, 10) joined together, namely a first layer (9) made up of a first sheet of metal (11) and a second layer (10) comprising a thickness of plastic material (12), the first layer (9) being positioned on the outside of the container (3),
- the said panel (7) comprises first grooves (14a-14d) formed in the second layer (10) along the fold lines,
- the said panel (7) comprises a peripheral second groove (17) formed in the second layer (10) and accepting the peripheral edge (5a) of the bottom wall (5).

2. Device (2) according to claim 1, **characterised in that** the plastic material of the second layer (10) is polyethylene.

3. Device (2) according to one of claims 1 and 2, **characterised in that** it comprises sealing means added into the first grooves (14a-14d) and/or into the connection between the lateral peripheral wall (15) and the bottom wall (5) and/or where the free ends (7a, 7b) of the panel (7) are joined.

4. Device (2) according to any one of claims 1 to 3, **characterised in that** the joining means (8) comprise at least one tongue (25a-25g) and one tongue-retaining cutout (26a-26g) which are arranged in correspondence with one another at the free ends (7a, 7b) of the panel (7).

5. Device (2) according to any one of claims 1 to 4, **characterised in that** the joining means (8) comprise thickness-reducing zones (27a-27b) which are intended to overlap one another and are sized so that their thickness (e1) when overlapped with one another is substantially equal to the maximum thickness (e2) of the panel (7).

6. Device (2) according to any one of claims 1 to 3, **characterised in that**:
- the joining means (8) comprise a rebate (29) at one of the free ends (7a, 7b) of the panel (7), which rebate is configured to accept the other of the free ends (7a, 7b),
- the free ends (7a, 7b) are joined making an angle (β) between them, the angle (β) preferably being around 90°.

7. Device (2) according to any one of claims 1 to 6, **characterised in that** the first sheet of metal (11) has a thickness of between around 0.3 mm and around 1.5 mm.

8. Device (2) according to any one of claims 1 to 7, **characterised in that** the second layer (10) comprises a second sheet of metal (13) covering the thickness of plastic material (12) which is thus sandwiched between the first (11) and second (13) metal sheets.

9. Device (2) according to claim 8, **characterised in that** the second sheet of metal (13) has a thickness of between around 0.3 mm and around 1.5 mm.

10. Device (2) according to any one of claims 1 to 9, **characterised in that** the thickness of plastic material (12) of the second layer (10) is around 1.5 mm to around 5 mm.

11. Device (2) according to any one of claims 1 to 10, **characterised in that**:
- it comprises a discharge pipe (18) connected to the discharge orifice (6) by connection means (19) and coming to bear against a lower face (5b) of the bottom wall (5),
- the connection means (19) comprise a retaining collar (20) with a radial extension (21) coming to bear against an upper face (5c) of the bottom wall (5) and extended by a tubular portion (22) that passes through the bottom wall (5) through the discharge orifice (6), which tubular portion (22) is equipped with a connecting end (23) collaborating with the discharge pipe (18) in order to retain the same.

12. Device (2) according to claim 11, **characterised in that** collaboration between the connecting end (23) and the discharge pipe (18) takes the form of a screwed connection, a force-fitting, a snap-fitting, a bayonet fastening, or adhesive bonding.

13. Kit (1) for manufacturing a rainwater collection device (2) of the water bank type having a hollow container (3) open along a main opening face (4), **characterised in that**:
- it comprises a bottom wall (5) equipped with a discharge orifice (6),
- it comprises a flat panel (7) extending between two free ends (7a, 7b) that are intended to be joined together by joining means (8),
- the said panel (7) is made of a composite material comprising two layers (9, 10) joined together, namely a first layer (9) consisting of a first sheet of metal (11) and a second layer (10) comprising a thickness (12) of plastic material,
- the said panel (7) comprises first grooves (14a-14d) formed in the second layer (10) and of a depth that allows the panel (7) to be folded in order to form the lateral peripheral wall (15) of a container (3),
- the said panel (7) comprises a second groove (17) formed in the second layer (10), extending between the two free ends (7a, 7b) of the panel (7) and intended to accept the peripheral edge (5a) of the bottom wall (5).

14. Manufacturing kit (1) according to claim 13, **characterised in that**:
- it comprises a discharge pipe (18) intended to be connected to the discharge orifice (6) by connection means (19) and coming to bear against a lower face (5b) of the bottom wall (5),
- the connection means (19) comprise a retaining collar (20) with a radial extension (21) intended to come to bear against an upper face (5c) of the bottom wall (5) and extended by a tubular portion (22) intended to pass through the bottom wall (5) through the discharge orifice (6), which tubular portion (22) is equipped with a connecting end (23) intended to collaborate with the discharge pipe (18) in order to retain the same.

15. Method for manufacturing, from a kit (1) according to one of claims 13 and 14, a rainwater collection device (2) of the water bank type having a hollow container (3) open on a main opening face (4), **characterised in that** it comprises the following steps:
a) folding the panel (7) of composite material along the first grooves (14a-14d), while engaging the peripheral edge (5a) of the bottom wall (5) in the second groove (17),
b) joining the free ends (7a, 7b) of the panel (7) using the joining means (8).

16. Method of manufacture according to claim 15, **characterised in that** it comprises a step c) during which sealing means are placed in the first grooves (14a-14d) and/or in connection between the lateral peripheral wall (15) and the bottom wall (5) and/or where the free ends (7a-7b) of the panel (7) are joined.
